# EUROPÄISCHE PATENTSCHRIFT

(11) **EP 2 334 469 B1**
(45) Veröffentlichungstag und Bekanntmachung des Hinweises auf die Patenterteilung: **04.09.2013**
(21) Anmeldenummer: 09782878.4
(22) Anmeldetag: 10.09.2009
(51) Int. Cl.: B23Q 16/02, B23Q 5/04

(54) **TRÄGER FÜR BEARBEITUNGSEINHEITEN**
SUPPORT FOR MACHINING UNITS
SUPPORT POUR UNITÉS D'USINAGE

(30) Priorität: 22.09.2008 DE 102008050667; 29.09.2008 DE 102008050871
(43) Veröffentlichungstag der Anmeldung: 22.06.2011
(73) Patentinhaber: Traub Drehmaschinen GmbH & Co. KG, 73262 Reichenbach an der Fils (DE)
(72) Erfinder: BAUMANN, Ulrich, 73252 Lenningen (DE)
(74) Vertreter: Hoeger, Stellrecht & Partner Patentanwälte
(86) Internationale Anmeldenummer: PCT/EP2009/061762
(87) Internationale Veröffentlichungsnummer: WO 2010/031733

(56) Entgegenhaltungen:
- DE-A1- 4 135 532
- DE-A1-102005 046 847
- DE-C1- 19 723 428
- JP-A- 58 077 429
- JP-A- 60 208 665

## Beschreibung

Die Erfindung betrifft einen Träger für Bearbeitungseinheiten einer Werkzeugmaschine, umfassend ein Trägergehäuse und einen am Trägergehäuse um eine Drehachse drehbaren Trägerkopf sowie einen Drehantrieb zum Drehen des Trägerkopfes um eine Drehachse relativ zum Trägergehäuse.

Derartige Träger für Bearbeitungseinheiten von Werkzeugmaschinen sind beispielsweise aus der DE 10 2005 046 847 A1 bekannt, bei diesen Trägern werden üblicherweise Drehantriebe zum Drehen des Trägerkopfes eingesetzt und Verzahnungen, beispielsweise Hirthverzahnungen, zum Fixieren des Trägerkopfes relativ zum Trägergehäuse in der jeweiligen Drehstellung.

Damit sind die einzelnen Drehstellungen des Trägerkopfes und somit die Ausrichtung der Bearbeitungseinheiten aufgrund dieser Art der Fixierung bei der Bearbeitung invariabel festgelegt.

Aus der DE 19 723 428 C1 ist ein Träger für Bearbeitungseinheiten einer Werkzeugmaschine bekannt, umfassend ein Trägergehäuse und einen am Trägergehäuse um eine Drehachse drehbaren Trägerkopf, der einen Trägerkörper mit Aufnahmen für lösbar montierbare Bearbeitungseinheiten aufweist, sowie einen Drehantrieb zum Drehen des Trägerkopfes um die Drehachse relativ zum Trägergehäuse, wobei der Drehantrieb zwei Antriebsmotore und ein ins Langsame übersetztes Getriebe aufweist, mit welchen der Trägerkopf drehbar ist, wobei mit dem Drehantrieb der Trägerkopf stufenlos in Drehstellungen bezüglich der Drehachse bringbar und in diesen Drehstellungen drehfest positionierbar ist, wobei die Antriebsmotore als die Drehstellung des Trägerkopfes auch im Stillstand haltende Antriebsmotore ausgebildet, sind, wobei eine Steuerung für die Antriebsmotore des Drehantriebs vorgesehen ist, mit welcher der Trägerkopf durch den Drehantrieb positionsgesteuert und lagegeregelt drehbar und positionierbar ist und wobei die Steuerung mittels eines Sensors die Drehstellung des Trägerkopfes erfasst.

Der Erfindung liegt die Aufgabe zugrunde, einen Träger der gattungsgemäßen Art derart zu verbessern, dass die Bearbeitungseinheiten des Trägerkopfes möglichst optimal eingesetzt werden können.

Diese Aufgabe wird bei einem Träger der eingangs beschriebenen Art erfindungsgemäß durch die Merkmale des Anspruchs 1 gelöst.

Erfindungsgemäß ist vorgesehen, dass eine Steuerung für den Antriebsmotor vorgesehen ist, mit welcher der Trägerkopf durch den Drehantrieb positionsgesteuert drehbar ist.

Damit besteht die Möglichkeit, mit dem Antriebsmotor den Trägerkopf in exakt vorgegebene Positionen zu drehen.

Insbesondere ist der Trägerkopf in beliebige Winkelpositionen positionsgesteuert drehbar.

Ferner sieht die erfindungsgemäße Ausbildung der Steuerung, insbesondere im Fall eines rückkopplungsfähigen Getriebes vor, dass mit der Steuerung der Trägerkopf lagegeregelt drehbar und positionierbar ist, das heißt, dass der Trägerkopf lagegeregelt in aufeinanderfolgende Drehstellungen drehbar ist aber auch lagegeregelt in verschiedenen Drehstellungen feststellbar ist und diese Drehstellungen lagegeregelt aufrecht erhält.

Insbesondere ist der Trägerkopf in beliebige Winkelpositionen lagegeregelt drehbar und in diesen positionierbar ist.

Eine weitere vorteilhafte Lösung sieht vor, dass mit der Steuerung der Trägerkopf durch den Drehantrieb um die Drehachse mit verschiedenen Drehvorschubgeschwindigkeiten drehbar ist.

Besonders günstig ist es dabei, wenn die verschiedenen Drehvorschubgeschwindigkeiten in einem Bereich stufenlos einstellbar sind.

Vorzugsweise sind dabei die Drehvorschubgeschwindigkeiten in einem Bereich zwischen einer Drehvorschubgeschwindigkeit Null und einer maximalen Drehvorschubgeschwindigkeit stufenlos einstellbar.

Eine erfindungsgemäß einsetzbare Steuerung ist vorzugsweise so ausgebildet, dass diese eine computergesteuerte numerische Steuerung ist.

Die Steuerung arbeitet vorzugsweise so, dass sie die durch einen Sensor erfasste Istposition mit einer Sollposition vergleicht und entsprechend den Antriebsmotor ansteuert.

Damit ist die Steuerung in der Lage, insbesondere im Fall einer Lageregelung, auch bei einem Stillstand des Trägerkopfes aufgrund des ins Langsame hochübersetzten Getriebes den Trägerkopf exakt in der vorgegebenen Position zu halten, da über die Steuerung eine stetige Nachregelung der Lage mittels des Antriebsmotors möglich ist.

Besonders günstig ist es dabei, wenn durch die Steuerung ein Strom für den Antriebsmotor erfassbar ist, um über den Strom des Antriebsmotors auch ein Maß für das auf den Trägerkopf wirkende Drehmoment, das heißt zumindest ein Maß für einen Teil der auf eine Bearbeitungseinheit wirkenden Kraft bei der Bearbeitung, zu erhalten.

Im einfachsten Fall kann dabei der Strom als Maß für eine Schnittkraft eines spanabhebenden Werkzeugs herangezogen werden, sofern die Drehbewegung des Trägerkopfes eine Vorschubbewegung darstellt.

Zur Erfassung der Drehstellung des Trägerkopfes sind üblicherweise Drehstellungssensoren im Antriebsmotor vorgesehen. Trotz des spielfreien Getriebes stellen sich jedoch Fehler hinsichtlich der Präzision der erfassten Drehstellungen ein, so dass es besonders günstig ist, wenn die Steuerung mittels eines Sensors die Drehstellung des Trägerkopfes unmittelbar erfasst, so dass damit die Präzision, mit welcher die einzelnen Drehstellungen angefahren werden können, erheblich verbessert wird.

Beispielsweise erfolgt die Erfassung der Drehstellung relativ zum Trägergehäuse oder relativ zum Maschinengestell.

Insbesondere werden bei einer derartigen Erfassung der Drehstellung des Trägerkopfes relativ zum Trägergehäuse mittels eines Sensors sämtliche Positionsfehler und Ungenauigkeiten des Drehantriebs ausgeglichen, da durch die unmittelbare Erfassung der Drehstellung des Trägerkopfes die Positionsfehler des Drehantriebs keine Auswirkung auf die Präzision bei der Erfassung der Drehstellung des Trägerkopfes haben.

Dabei könnte der Sensor im Trägerkopf angeordnet sein.

Besonders günstig ist es jedoch, wenn der Sensor im Trägergehäuse angeordnet ist.

Ferner ist es vorteilhaft, wenn der Sensor unmittelbar die Drehstellung des Trägerkopfes erfasst, so dass bei der Erfassung der Drehstellung keine Positionierfehler mehr auftreten, insbesondere keine Positionierfehler durch ein dazwischengeschaltetes Getriebe.

Eine derartige unmittelbare Erfassung der Drehstellung des Trägerkopfes wäre beispielsweise dadurch möglich, dass der Trägerkopf unmittelbar auf den Sensor wirkt und somit eine verfälschungsfreie Erfassung der Drehstellung des Trägerkopfes möglich wird.

Um jedoch bei der Anordnung des Sensors einen größeren räumlichen Freiheitsgrad zu haben, ist vorzugsweise vorgesehen, dass der Sensor über ein starres Kopplungselement mit dem Trägerkopf gekoppelt ist.

Ein derartiges starres Kopplungselement ist beispielsweise eine Welle, welche einerseits unmittelbar mit dem Trägerkopf verbunden ist und andererseits unmittelbar mit dem Sensor.

Eine hinsichtlich der konstruktiven Aspekte besonders günstige Lösung sieht vor, dass der Sensor über eine koaxial zur Drehachse verlaufende Koppelwelle mit dem Trägerkopf gekoppelt ist.

Insbesondere um die Drehstellungen der einzelnen Bearbeitungseinheiten exakt erfassen zu können, ist vorzugsweise vorgesehen, dass der Trägerkopf einen Aufnahmen für die Bearbeitungseinheiten aufweisenden Trägerkörper umfasst und dass die Koppelwelle mit dem Trägerkörper gekoppelt ist.

Zweckmäßigerweise ist dabei die Koppelwelle zu einer Stirnseite des Trägerkopfes geführt und mit einem stirnseitigen Deckel desselben verbunden, wobei der stirnseitige Deckel insbesondere fest mit dem Trägerkörper verbunden ist.

Die erfindungsgemäße Lösung sieht vor, dass der Drehantrieb einen Antriebsmotor und ein ins Langsame hochübersetztes, spielfreies Getriebe aufweist, mit welchen der Trägerkopf drehbar ist.

Der Vorteil dieser Lösung ist darin zu sehen, dass durch das hochübersetzte spielfreie Getriebe die Möglichkeit besteht, mit geringerer Leistung des Antriebsmotors den Trägerkopf in beliebigen Drehstellungen mit einem ausreichend großen Haltemoment zu positionieren und andererseits den Trägerkopf mit einem ausreichend großen Drehmoment zu drehen, so dass eine Drehbewegung des Trägerkopfes beispielsweise als Relativbewegung für eine spanabhebende Bearbeitungseinheit einsetzbar ist oder das Drehmoment des Antriebsmotors ausreichend hoch ist, um über das hochübersetzte spielfreie Getriebe die Drehachse als numerisch gesteuerte A-Achse zu betreiben.

Die erfindungsgemäße Lösung ist vorteilhaft, da mit dem Drehantrieb der Trägerkopf stufenlos in Drehstellungen bezüglich der Drehachse bringbar und in diesen Drehstellungen drehfest positionierbar ist.

Damit ist die Möglichkeit geschaffen, den Drehantrieb mit allen Vorteilen einer computernumerisch gesteuerten A-Achse einzusetzen.

Eine derartige A-Achse schafft die Möglichkeit, die Ausrichtung der Bearbeitungseinheiten frei zu gestalten und auch Positionierfehler oder auch Geometriefehler der Bearbeitungseinheiten durch die numerische Steuerung gegebenenfalls unmittelbar vor einem Werkzeugeinsatz zu korrigieren.

Darüber hinaus schafft die erfindungsgemäße Lösung die Möglichkeit, die Drehbewegung um die Drehachse als Vorschubachse bei der Bearbeitung des Werkstücks einzusetzen, das heißt die Drehbewegung um die Drehachse in Form der A-Achse als Relativbewegung zwischen Werkstück und Werkzeug bei der Bearbeitung des Werkstücks einzusetzen, so dass beispielsweise eine Bearbeitung eines stehenden Werkstücks allein durch die Bewegung der A-Achse oder gegebenenfalls interpolierend mit weiteren Achsen der Werkzeugmaschine möglich ist.

Eine besonders vorteilhafte Lösung sieht dabei vor, dass das ins Langsame hochübersetzte spielfreie Getriebe die Drehzahl des Antriebsmotors um mindestens einen Faktor 10 reduziert, noch besser um mindestens einen Faktor 15 und besonders zweckmäßig um mindestens einen Faktor 20.

Das hochübersetzte spielfreie Getriebe ist dabei als rückkopplungsfähiges Getriebe ausgebildet, das heißt, dass dieses keine Selbsthemmung aufweist.

In diesem Fall wäre es beispielsweise denkbar, zur Fixierung der jeweiligen Drehstellung des Trägerkopfes oder zur Unterstützung der Fixierung der jeweiligen Drehstellung des Trägerkopfes eine stufenlose Fixiereinrichtung, beispielsweise eine Bremse antriebsseitig des rückkopplungsfähigen Getriebes anzuordnen, so dass das über das hochübersetzte spielfreie Getriebe rückgekoppelte Drehmoment sich nur begrenzt oder gar nicht auf den Antriebsmotor auswirkt.

Besonders vorteilhaft ist es jedoch, wenn der Antriebsmotor als die Drehstellung des Werkzeugträgerkopfes auch im Stillstand haltender Antriebsmotor ausgebildet ist, das heißt, dass der Antriebsmotor ein ausreichend großes Stillstandsmoment aufweist, um auf den Antriebsmotor zurückwirkenden Momenten entgegenwirken zu können.

Hinsichtlich der Ausbildung des ins Langsame hochübersetzten spielfreien Getriebes sind zwei Möglichkeiten denkbar.

Das ins Langsame hochübersetzte spielfreie Getriebe ist. ein Zykloidgetriebe oder ein Harmonic Drive, die beide rückkopplungsfähige Getriebe sind.

Ein Zykloidgetriebe wird beispielsweise von der Firma Nabtesco Precision Europe GmbH und ein Harmonic Drive wird beispielsweise von der Harmonic Drive AG angeboten.

Der Trägerkopf kann bei der erfindungsgemäßen Lösung in unterschiedlichster Art und Weise ausgebildet sein.

So sieht eine vorteilhafte Lösung vor, dass der Trägerkopf einen Trägerkörper mit Aufnahmen für lösbar montierbare Bearbeitungseinheiten aufweist.

Dabei können die Bearbeitungseinheiten im einfachsten Fall Werkzeuge sein, die im einfachsten Fall stationär durch den Trägerkörper gehalten werden. Alternativ dazu ist es aber auch denkbar, dass der Trägerkörper Aufnahmen für angetriebene Bearbeitungseinheiten aufweist.

Für den Antrieb angetriebener Bearbeitungseinheiten ist beispielsweise vorgesehen, dass eine Antriebswelle von einem im Trägergehäuse angeordneten Antriebsmotor koaxial zur Drehachse zum Trägerkopf geführt ist.

Im einfachsten Fall ist dabei der Träger als Werkzeugrevolver ausgebildet und der Trägerkopf ein Revolverkopf des Werkzeugrevolvers.

Alternativ dazu ist es denkbar, den Trägerkopf mit einem Trägerkörper zu versehen, an welchem umfangsseitig eine Vielzahl von Werkzeugen aufeinanderfolgend angeordnet sein kann, beispielsweise können dies in geringen Winkelabständen von beispielsweise mehr als 15° angeordnete einzelne Werkzeuge sein.

Eine andere Lösung sieht vor, dass der Trägerkörper umfangsseitig mit aufeinanderfolgenden Schneiden versehen ist und somit beispielsweise durch seine rotierende Bewegung mit den aufeinanderfolgenden Schneiden eine Fräs- oder Sägebearbeitung ausführen kann.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Ansicht einer Werkzeugmaschine mit einem erfindungsgemäßen Träger;
- Fig. 2: einen Schnitt durch einen der Träger der erfindungsgemäßen Werkzeugmaschine;
- Fig. 3: eine schematische Draufsicht auf einen Trägerkopf im Fall eines als Werkzeugrevolver ausgebildeten Trägers;
- Fig. 4: eine Draufsicht auf den Trägerköpf mit einer Vielzahl aufeinanderfolgender Bearbeitungseinheiten und
- Fig. 5: eine Draufsicht auf den Trägerkopf im Fall von umfangsseitig aufeinanderfolgend angeordneten Schneiden.

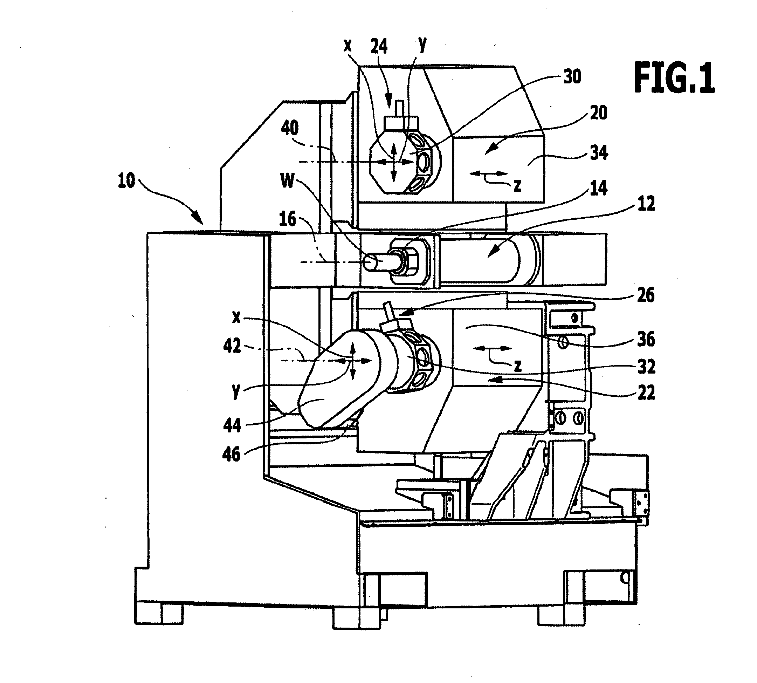

Ein Ausführungsbeispiel einer Werkzeugmaschine, dargestellt in Fig. 1, umfasst ein als Ganzes mit 10 bezeichnetes Maschinengestell, an welchem eine Werkstückspindel 12 angeordnet ist, mit welcher eine Werkstückaufnahme 14 um eine Spindelachse 16 rotierend antreibbar ist.

Zur Bearbeitung eines in der Werkstückaufnahme 14 gehaltenen Werkstücks W sind beispielsweise zwei Träger 20 bzw. 22 für Bearbeitungseinheiten, das heißt beispielsweise Werkzeugeinheiten 24 bzw. 26, vorgesehen, welche jeweils an einen Trägerkopf 30 bzw. 32 angeordnet sind, welcher gegenüber einem Trägergehäuse 34 bzw. 36 jeweils um eine Drehachse 40 bzw. 42 drehbar sind.

Die Träger 20 bzw. 22 sind dabei ihrerseits jeweils in einer parallel zur Spindelachse 16 verlaufenden Z-Richtung, in einer quer zur Spindelachse verlaufenden X-Richtung und in einer quer zur X-Richtung und Z-Richtung verlaufenden Y-Richtung bewegbar, um mit den Werkzeugeinheiten 24 bzw. 26 das Werkstück W zu bearbeiten.

Ferner ist beispielsweise noch der Trägerkopf 32 mit einem Arm 44 versehen, welcher beispielsweise eine Spindel 46 trägt, die als Gegenspindel zur Werkstückspindel 12 ausgebildet und mit einer Werkstückaufnahme zum Übernehmen des Werkstücks W aus der Werkstückspindel 12 versehen ist.

Alternativ ist es aber auch denkbar, die Spindel 46 auch als Bearbeitungsspindel auszubilden, mit welcher ebenfalls eine Bearbeitung des Werkstücks erfolgen kann, wobei in der Bearbeitungsspindel beispielsweise ein Fräswerkzeug eingesetzt werden kann.

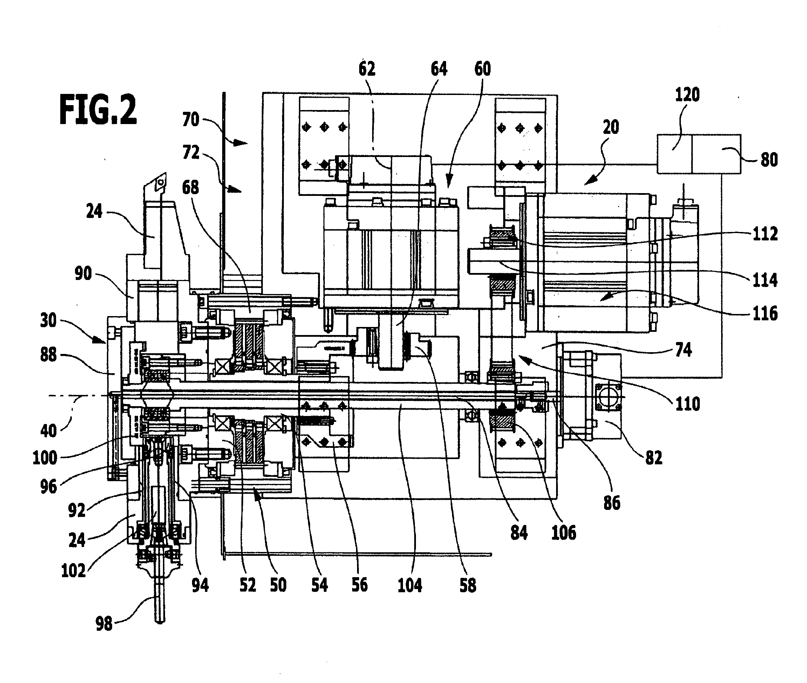

Wie in Fig. 2 am Beispiel des Trägers 20 dargestellt, ist zum Drehen des Trägerkopfes 30 der Trägerkopf 30 mittels eine spielfreien Getriebes 50 um die Drehachse 40 drehbar gehalten, wobei der Trägerkopf 30 mit einem Abtriebring 52 des spielfreien Getriebes 50 verbunden ist, während eine Antriebswelle 54 des spielfreien Getriebes mit einem Zahnrad 56 versehen ist, welches seinerseits durch ein Abriebsritzel 58 eines als Ganzes mit 60 bezeichneten Antriebsmotors angetrieben ist.

Der Antriebsmotor 60 ist dabei beispielsweise so angeordnet, dass eine Drehachse 62 einer Antriebswelle 64 desselben quer zur Drehachse 40 des Trägerkopfes 30 verläuft.

Das in Fig. 2 dargestellte spielfreie Getriebe 50 ist beispielsweise als hochübersetztes spielfreies Getriebe ausgebildet, welches um einen Faktor im Bereich zwischen 20 und 30 ins Langsame übersetzt.

Das in Fig. 2 dargestellte hochübersetzte spielfreie Getriebe ist dabei beispielsweise ein Zykloidgetriebe. Anstelle des in Fig. 2 dargestellten Zykloidgetriebes ist es aber auch denkbar, ein Planetengetriebe, ein Harmonic Drive oder ein Schneckengetriebe vorzusehen.

Das spielfreie Getriebe 50 ist seinerseits mit einem Getriebegehäuse 68 an einem Rahmen 70 des Trägergehäuses 34 gehalten, so dass über das Getriebegehäuse 68 auch gleichzeitig eine Lagerung des Abtriebrings 52 relativ zum Rahmen 70 des Trägergehäuses 34 erfolgt, sowie eine Lagerung der Antriebswelle 54 des spielfreien Getriebes 50 relativ zum Rahmen 70 des Trägergehäuses 34.

An dem Rahmen 70 ist außerdem auch der Antriebsmotor 60 fixiert.

Mit dem hochübersetzten spielfreien Getriebe 50 besteht nun die Möglichkeit, den Trägerkopf 30 mit den Werkzeugeinheiten 24 in beliebige Drehstellungen bezüglich der Drehachse 40 zu drehen und dann in diesen Stellungen zu fixieren.

Hierzu ist dem Antriebsmotor 60 eine Steuerung 80 zugeordnet, welche den Antriebsmotor 60 steuert, und zwar so, dass der Antriebsmotor 60 entweder den Trägerkopf 30 um die Drehachse 40 dreht oder in einer bestimmten Drehstellung relativ zum Trägergehäuse 34 drehfest festhält.

Um dabei den Trägerkopf 30 mit den Werkzeugeinheiten 24 relativ zum Trägergehäuse 34 in die gewünschte Drehstellung bringen und in dieser halten zu können, ist es für die Steuerung 80 erforderlich, die Drehstellung des Trägerkopfes 30 relativ zum Trägergehäuse 34 zu erfassen.

Hierzu ist ein Drehsensor 82 vorgesehen, welcher über eine Sensorwelle 84 mit dem Trägerkopf 30 gekoppelt ist.

Beispielsweise ist die Sensorwelle 84 so ausgebildet, dass sie ein Sensorantriebselement 86 mit dem Trägerkopf 30 drehfest koppelt, wobei die Sensorwelle 84 von dem Sensorantriebselement 86 des Sensors 82 koaxial zur Drehachse 40 des Trägerkopfes 30 durch das spielfreie Getriebe 50, insbesondere die Antriebswelle 54 desselben, hindurchgeführt und außerdem auch noch durch den Trägerkopf 30, bis zu einem stirnseitigen Deckel 88 des Trägerkopfes 30 durchgeführt ist.

Der stirnseitige Deckel 88 des Trägerkopfes 30 ist dabei fest mit einem Trägerkörper 90 des Trägerkopfes 30 drehfest verbunden, so dass der Sensor 82 über die Sensorwelle 84 in der Lage ist, exakt die Drehstellungen des Werkzeugträgerkörpers 90 relativ zu dem Rahmen 70 des Trägergehäuses 34 zu erfassen.

Vorzugsweise umfasst der Rahmen 70 des Trägergehäuses 34 eine dem Trägerkopf 30 zugewandte Rahmenwange 72, in welcher das Getriebegehäuse 68 gehalten ist sowie eine dem Trägerkopf 30 abgewandte Rahmenwange 74, an welcher beispielsweise der Sensor 82 gehalten ist.

Bei dem in Fig. 2 dargestellten Ausführungsbeispiel des erfindungsgemäßen Trägerkopfes 30 sind in dessen Trägerkörper 90 Aufnahmen 92 vorgesehen, in welche die Werkzeugeinheiten 24 mit einem Schaftbereich 94 einsteckbar sind.

Ferner sind die Werkzeugeinheiten 24 zumindest teilweise mit Antriebsritzein 96 versehen, welche auf einer einem Bearbeitungswerkzeug 98 gegenüberliegenden Seite des Schafts 94 angeordnet sind und in kämmendem Eingriff mit einem Antriebsrad 100 stehen, welches in einem Innern des Trägerkopfes 30 drehbar gelagert ist, so dass über das Antriebsrad 100 die Antriebsritzel 96 der Werkzeugeinheiten 24 antreibbar sind, welche zum Antrieb des Werkzeugs 98 mit diesem gekoppelt sind, beispielsweise durch eine unmittelbare drehfeste Kopplung zwischen dem Werkzeug 98 und dem Antriebsritzel 96 über eine in der Werkzeugeinheit 24 drehbar gelagerte Spindel.

Das Antriebsrad 100, das seinerseits in dem Trägerkopf 30 drehbar gelagert ist, ist über eine koaxial zur Drehachse 40 verlaufende Werkzeugantriebswelle 104 antreibbar, wobei die Werkzeugantriebswelle 104 so angeordnet ist, dass diese von der Sensorwelle 84 durchsetzt und somit relativ zur Sensorwelle drehbar ist.

Die Werkzeugantriebswelle 104 erstreckt sich ausgehend von dem Antriebsrad 100 durch einen Innenraum des Trägerkopfes 30, durch das spielfreie Getriebe 50 und insbesondere die Antriebswelle 54 desselben hindurch bis zu einem nahe der Rahmenwange 74 angeordneten Getrieberad 106, eines als Ganzes mit 110 bezeichneten Getriebes, dessen anderes Getrieberad 112 auf einer Antriebswelle 114 eines Werkzeugantriebsmotors 116 sitzt, der seinerseits beispielsweise an der Rahmenwange 74 gehalten ist.

Bei dem in Fig. 2 dargestellten und vorstehend beschriebenen erfindungsgemäßen Träger 20 für Bearbeitungseinheiten, beispielsweise Werkzeugeinheiten 24, ist nun einerseits der Trägerkopf 30 um die Drehachse 40 in beliebige Drehstellungen mittels des Antriebsmotors 60 drehbar und in den verschiedenen Drehstellungen durch entsprechende Ansteuerung des Antriebsmotors 60 mittels der Steuerung 80 festlegbar, wobei die Steuerung 80 im letztgenannten Fall den Antriebsmotor 60 in einem Antriebsmodus betreibt, in welchem der Antriebsmotor 60 die Antriebswelle 64 in einer Drehstellung hält.

Selbst bei Rückwirkungen von den auf den Trägerkopf 30 wirkenden Kräften über das spielfreie Getriebe 50 auf die Antriebswelle 64 des Antriebsmotors 60 kann der Antriebsmotor 60 durch das in dem Betriebsmodus erzeugte Haltemoment bei entsprechender Regelung seitens der Steuerung 80 die Drehstellung des Trägerkopfes 30 aufrecht erhalten genauso, wie wenn diese starr am Rahmen 70 fixiert wäre.

Dabei erfolgt stets die Erfassung der Drehstellung des Trägerkopfes 30 unmittelbar über die Sensorwelle 84 und den Sensor 82, wobei die Sensorwelle 84 die Drehstellung des Trägerkopfes 30 torsionsfrei auf den Sensor 82, das heißt das Sensorantriebselement 86, überträgt, so dass der Sensor 82 die Drehposition des Trägerkopfes 30 exakt erfasst.

Die Steuerung 80 führt beispielsweise auf der Basis der mit dem vom Sensor 82 erfassten Drehstellungen des Trägerkopfes 30 und vorgegebenen Sollwerten für die Drehstellungen einen Ist-Soll Vergleich durch und regelt mit einer Lageregelung 120 die Drehstellung des Antriebsmotors 60 entsprechend der Abweichung vom Sollwert.

Mit einer derartigen Lageregelung 120 sind einerseits stationäre Drehstellungen des Antriebsmotors 60 realisierbar als auch andererseits mit der Zeit dynamisch wechselnde Drehstellungen, so dass die Möglichkeit besteht, komplexe dynamische Drehbewegungen des Trägerkopfes 30 zu realisieren.

Außerdem besteht bei einer Bearbeitung die Möglichkeit, aufgrund des dem Antriebsmotor 60 bei der Lageregelung zugeführten Stroms das auf diesen durch die Bearbeitung wirkende Drehmoment und somit Bearbeitungskräfte mittels der Steuerung 80 zu erfassen und auszuwerten.

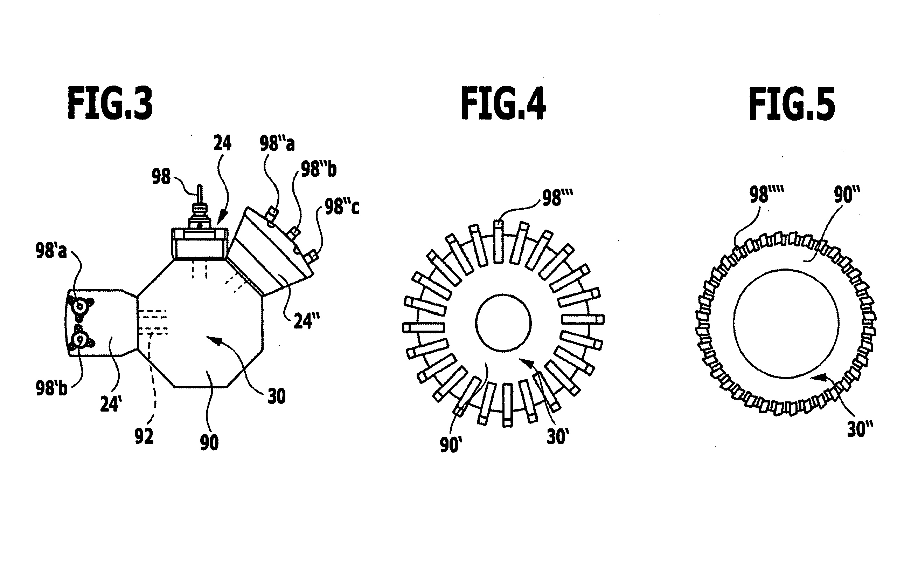

Wie in Fig. 3 dargestellt, können in den Trägerkopf 30 Werkzeugeinheiten 24 eingesetzt sein, die wie bereits beschrieben, ein angetriebenes Werkzeug 98 aufweisen.

Es ist aber auch denkbar, Werkzeugeinheiten 24' in die Aufnahmen 92 des Trägerkörpers 90 einzusetzen, wobei die Werkzeugeinheit 24' beispielsweise zwei angetriebene Werkzeuge 98' aufweist. Bei einer derartigen Werkzeugeinheit 24' lässt sich aufgrund der erfindungsgemäßen Möglichkeit, der beliebigen Drehpositionierung des Trägerkopfes 30 jedes der Werkzeuge 98'a oder 98'b relativ zum zu bearbeiten Werkstück W exakt positionieren, ohne auf eine feststehende Winkeleinteilung Rücksicht nehmen zu müssen.

Darüber hinaus besteht auch noch die Möglichkeit, in die Aufnahmen 92 des Trägerkörpers 90 eine Werkzeugeinheit 24" einzusetzen, welche nicht angetriebene Werkzeuge aufweist, dafür beispielsweise drei feststehende Schneidwerkzeuge 98"a, 98"b und 98"c, wobei hierbei ebenfalls der Vorteil der erfindungsgemäßen beliebigen Drehpositionierbarkeit des Trägerkopfes 30 die Möglichkeit eröffnet, die Schneidwerkzeuge 98"a oder 98"b oder 98"c jeweils zum Werkstück W exakt zu positionieren und entsprechend einem Verschleiß die Ausrichtung derselben durch Änderung der Drehstellung des Trägerkopfes 30 zu korrigieren.

Alternativ zur Ausbildung des Trägerkopfes 30 als Trägerkörper 90 besteht, wie in Fig. 4 dargestellt, die Möglichkeit, den Trägerkopf 30' als Trägerkörper 90' auszubilden, welcher eine Vielzahl von beispielsweise in gleichen Winkelabständen angeordneten einzelnen Schneidwerkzeugen 98"' trägt, die durch die beliebige Winkelpositionierbarkeit des Trägerkopfes 30' einzeln in Einsatz bringbar und verschleißkorrigierbar sind.

Bei einer weiteren Ausführungsform der erfindungsgemäßen Lösung ist, wie in Fig. 5 dargestellt, der Trägerkopf 30" so ausgebildet, dass ein Trägerkörper 90" eine Vielzahl aufeinanderfolgender Schneidwerkzeuge 98"" trägt, welche es erlauben, den Trägerkopf 30" mit den Schneidwerkzeugen 98"" ähnlich einer Trennsäge oder eines großen Fräswerkzeuges einzusetzen und aufgrund der beliebigen Drehbarkeit des Trägerkopfes 30" um die Drehachse 40 sägenähnliche Bearbeitungen oder Fräsbearbeitungen vornehmen zu können.

## Patentansprüche

1. Träger (20, 22) für Bearbeitungseinheiten (24) einer Werkzeugmaschine, umfassend ein Trägergehäuse (34) und einen am Trägergehäuse (34) um eine Drehachse (40) drehbaren Trägerkopf (30), der einen Trägerkörper (90) mit Aufnahmen für lösbar montierbare Bearbeitungseinheiten (24) und/oder mit umfangsseitig des Trägerkörpers (90) einer Vielzahl von aufeinanderfolgenden Werkzeugen (98"') oder mit umfangsseitig aufeinanderfolgenden Schneiden (98"") und/oder mit einer von einem Arm (44) des Trägerkopfes (30) getragenen Spindel (46) aufweist, sowie einen Drehantrieb zum Drehen des Trägerkopfes (30) um die Drehachse (40) relativ zum Trägergehäuse (34), wobei der Drehantrieb einen Antriebsmotor (60) und ein ins Langsame hochübersetztes spielfreies und rückkopplungsfähiges Zykloidgetriebe oder Harmonic Drive (50) aufweist, mit welchen der Trägerkopf (30) drehbar ist, wobei mit dem Drehantrieb der Trägerkopf (30) stufenlos in Drehstellungen bezüglich der Drehachse (40) bringbar und in diesen Drehstellungen drehfest positionierbar ist, wobei der Antriebsmotor (60) als die Drehstellung des Trägerkopfes (30) auch im Stillstand haltender Antriebsmotor ausgebildet ist, wobei eine Steuerung (80) für einen Antriebsmotor (60) des Drehantriebs vorgesehen ist, mit welcher der Trägerkopf (30) durch den Drehantrieb positionsgesteuert und lagegeregelt drehbar und positionierbar ist und wobei die Steuerung (80) mittels eines Sensors (82) die Drehstellung des Trägerkopfes (30) erfasst.

2. Träger nach Anspruch 1, **dadurch gekennzeichnet, dass** der Sensor (82) im Trägergehäuse (34) angeordnet ist.

3. Träger nach Anspruch 1 oder 2, **dadurch gekennzeichnet, dass** der Sensor (82) über ein starres Kopplungselement (84) mit dem Trägerkopf (30) gekoppelt ist.

4. Träger nach Anspruch 3, **dadurch gekennzeichnet, dass** der Sensor (82) über eine koaxial zur Drehachse (40) verlaufende Koppelwelle (84) mit dem Trägerkopf (30) gekoppelt ist.

5. Träger nach Anspruch 4, **dadurch gekennzeichnet, dass** der Trägerkopf (30) einen Aufnahmen (92) für die Bearbeitungseinheiten aufweisenden Trägerkörper (90) umfasst und dass die Koppelwelle (84) mit dem Trägerkörper (90) gekoppelt ist.

6. Träger nach Anspruch 4 oder 5, **dadurch gekennzeichnet, dass** die Koppelwelle (84) zu einer Stirnseite des Trägerkopfs (30) geführt und mit einem stirnseitigen Deckel (88) desselben verbunden ist.

7. Träger nach Anspruch 6, **dadurch gekennzeichnet, dass** der Trägerkörper (90) Aufnahmen (92) für angetriebene Bearbeitungseinheiten (24) aufweist und dass beispielsweise eine Antriebswelle (114) von einem im Trägergehäuse (34) angeordneten Antriebsmotor (116) koaxial zur Drehachse (40) zum Trägerkopf (30) geführt ist.

## Claims

1. Support (20, 22) for machining units (24) of a machine tool, comprising a support housing (34) and a supporting head (30) rotatable on the support housing (34) about an axis of rotation (40), said head having a supporting body (90) with receptacles for detachably mountable machining units (24) and/or with a plurality of tools (98"') following one another around the circumference of the supporting body (90) or with blades (98"") following one another around the circumference and/or with a spindle (46) borne by an arm (44) of the supporting head (30), as well as a rotary drive for rotating the supporting head (30) about the axis of rotation (40) relative to the support housing (34), wherein the rotary drive has a drive motor (60) and a cycloidal drive or harmonic drive (50) for rotating the supporting head (30), said drive being clearance-free, capable of feedback and having a high transmission to slow, wherein the supporting head (30) is adapted to be brought steplessly into rotary positions with respect to the axis of rotation (40) by way of the rotary drive and positioned non-rotatably in these rotary positions, wherein the drive motor (60) is designed as a drive motor maintaining the rotary position of the supporting head (30) even when idle, wherein a control (80) is provided for a drive motor (60) of the rotary drive for rotating and positioning the supporting head (30) by means of the rotary drive in a position controlled and regulated manner and wherein the control (80) detects the rotary position of the supporting head (30) by means of a sensor (82).

2. Support as defined in claim 1, **characterized in that** the sensor (82) is arranged in the support housing (34).

3. Support as defined in claim 1 or 2, **characterized in that** the sensor (82) is coupled to the supporting head (30) via a rigid coupling element (84).

4. Support as defined in claim 3, **characterized in that** the sensor (82) is coupled to the supporting head (30) via a coupling shaft (84) extending coaxially to the axis of rotation (40).

5. Support as defined in claim 4, **characterized in that** the supporting head (30) comprises a supporting member (90) with receptacles (92) for the machining units and that the coupling shaft (84) is coupled to the supporting member (90).

6. Support as defined in claim 4 or 5, **characterized in that** the coupling shaft (84) is guided to an end face of the supporting head (30) and connected to an end-side cover (88) thereof.

7. Support as defined in claim 6, **characterized in that** the supporting member (90) has receptacles (92) for driven machining units (24) and that a drive shaft (114) of a drive motor (116) arranged in the support housing (34) is guided, for example, to the supporting head (30) coaxially to the axis of rotation (40).

## Revendications

1. Support (20, 22) pour des unités d'usinage (24) d'une machine-outil, comprenant un boîtier de support (34) et une tête de support (30) pouvant tourner autour d'un axe de rotation (40) sur le boîtier de support (34) et qui présente un corps de support (90) avec des logements pour des unités d'usinage (24) pouvant être montées de façon amovible et/ou avec une pluralité d'outils (98"') se succédant sur la périphérie du corps de support (90) et/ou avec des couteaux (98"") se succédant sur la périphérie et/ou avec une broche (46) portée par un bras (44) de la tête de support (30), ainsi qu'un entraînement rotatif pour faire tourner la tête de support (30) autour de l'axe de rotation (40) par rapport au boîtier de support (34), dans lequel l'entraînement rotatif comprend un moteur d'entraînement (60) et un engrenage cycloïde ou Harmonic Drive (50) démultiplié sans jeu et pouvant être asservi, avec lesquels la tête de support (30) peut tourner, dans lequel la tête de support (30) peut être amenée avec l'entraînement rotatif de manière continue dans des positions angulaires par rapport à l'axe de rotation (40) et peut être calée dans ces positions angulaires, dans lequel le moteur d'entraînement (60) est constitué par un moteur d'entraînement maintenant même à l'arrêt la position angulaire de la tête de support (30), dans lequel il est prévu une commande (80) pour un moteur d'entraînement (60) de l'entraînement rotatif, avec laquelle la tête de support (30) peut tourner et être positionnée de façon commandée en position et régulée en placement par l'entraînement rotatif et dans lequel la commande (80) détecte au moyen d'un capteur (82) la position angulaire de la tête de support (30).

2. Support selon la revendication 1, **caractérisé en ce que** le capteur (82) est disposé dans le boîtier de support (34).

3. Support selon la revendication 1 ou 2, **caractérisé en ce que** le capteur (82) est couplé à la tête de support (30) au moyen d'un élément de couplage rigide (84).

4. Support selon la revendication 3, **caractérisé en ce que** le capteur (82) est couplé à la tête de support (30) au moyen d'un arbre de couplage (84) qui s'étend coaxialement à l'axe de rotation (40).

5. Support selon la revendication 4, **caractérisé en ce que** la tête de support (30) comprend un corps de support (90) comportant des logements (92) pour les unités d'usinage et **en ce que** l'arbre de couplage (84) est couplé au corps de support (90).

6. Support selon la revendication 4 ou 5, **caractérisé en ce que** l'arbre de couplage (84) est guidé vers une face frontale de la tête de support (30) et est relié à un couvercle frontal (88) de celle-ci.

7. Support selon la revendication 6, **caractérisé en ce que** le corps de support (90) présente des logements (92) pour des unités d'usinage entraînées (24) et **en ce que** par exemple un arbre d'entraînement (114) est guidé, coaxialement à l'axe de rotation (40), depuis un moteur d'entraînement (116) disposé dans le boîtier de support (34) jusqu'à la tête de support (30).
